# EUROPEAN PATENT APPLICATION

(11) **EP 1 696 397 A2**
(43) Date of publication of application: **30.08.2006**
(21) Application number: 06250961.7
(22) Date of filing: 23.02.2006
(51) Int. Cl.: G08B 13/196, G08B 15/00

(54) **Method and apparatus for monitoring**

(30) Priority: 23.02.2005 US 654954 P
(71) Applicant: Prospect SA, Santiago (CL)
(72) Inventor: Shats, Eyal, Nunoa-Santiago (CL); Vera, Luis, Penalolen Santiago (CL)
(74) Representative: Maury, Richard Philip

(57) **Abstract**

A monitoring system that makes use of an automated data collection system such as, for example, closed-circuit television, and inputs from a human operator. The monitoring system also allows for remote monitoring of a plurality of remote locations and for an operator to monitor several operations simultaneously. Also, a method for operating such a monitoring system.

## Description

### CROSS-REFERENCE TO RELATED APPLICATIONS

This application claims priority to provisional U.S. patent application entitled, "METHOD AND APPARATUS FOR MONITORING A FACILITY," filed February 23, 2005, having a serial number 60/654,954 and now pending, the disclosure of which is hereby incorporated by reference in its entirety.

### FIELD OF THE INVENTION

The present invention relates generally to monitoring systems. The present invention also relates generally to methods of operating such systems.

### BACKGROUND OF THE INVENTION

Currently-available monitoring systems are typically used as security systems. Such security systems typically make use of closed-circuit television (CCTV) systems and video recorders to effectuate video surveillance of a location (e.g., a bank, a warehouse, etc.). Since the cameras, the televisions, and the video recorders in a CCTV system are all generally located proximate to the location or site that is being monitored, today's monitoring systems are limited to local monitoring.

Also, currently-available monitoring systems are generally limited to a single application (e.g., security). Therefore, such systems provide relatively limited benefit when compared to the cost of the components that make up the systems. In addition, for today's monitoring systems to operate effectively, a dedicated operator (e.g., a security guard) is required to continuously monitor a single camera focused on a single location. This need for a dedicated operator further increases the cost of modem security systems without providing any additional benefit.

At least in view of the above, what is needed are monitoring systems that are capable of performing a plurality of applications. What is also needed is monitoring systems that can provide information to remote locations. What is further needed are monitoring systems that allow for a single or multiple operator to monitor the system intermittently, thereby freeing the operator up to perform additional tasks. In addition, what is needed are methods of operating the above-discussed monitoring systems.

### SUMMARY OF THE INVENTION

The foregoing needs are met, to a great extent, by various embodiments of the present invention. According to a first embodiment of the present invention, a monitoring system is provided. The monitoring system includes a data collection system, an operator interface, and a checklist system. The data collection system is configured to collect data from location. The checklist system is configured to receive data from the data collection system, to request an input from an operator at the operator interface, and to process the data using an automated process and the operator input.

According to another embodiment of the present invention, a method of monitoring is provided. The method includes collecting data pertaining to a location in an automated manner. The method also includes presenting the data to an operator and requesting an input from an operator. The method further includes processing the data using the input from the operator and an automated procedure.

According to yet another embodiment of the present invention, another monitoring system is provided. The monitoring system includes means for collecting data pertaining to a location in an automated manner. The monitoring system also includes means for presenting the data to an operator. The monitoring system further includes means for requesting an input from an operator. In addition, the monitoring system also includes means for processing the data using the input from the operator and an automated procedure.

There has thus been outlined, rather broadly, certain embodiments of the invention in order that the detailed description thereof herein may be better understood, and in order that the present contribution to the art may be better appreciated. There are, of course, additional embodiments of the invention, such as those that will be described below and which will form the subject matter of the claims appended hereto.

According to another embodiment of the present invention, yet another monitoring system is provided. The monitoring system includes a data collection system configured to collected data from a location. The monitoring system also includes a data processing system. In addition, the monitoring system includes a checklist system configured to receive the data from the data collection system, to request an input from the data processing system, and to process the data using an automated process and the input.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

### BRIEF DESCRIPTION OF THE DRAWINGS

FIG. 1 is a schematic diagram of a monitoring system according to an embodiment of the present invention.

FIG. 2 illustrates a first representative display that is generated using the checklist system illustrated in FIG. 1 and which appears at the operator interface also illustrated therein.

FIGS. 3 and 4 each illustrate pop-up menus analogous to the pop-up menu illustrated in FIG. 2 and that show a different view of the same item.

FIG. 5 illustrates another pop-up menu analogous to the pop-up menu illustrated in FIG. 2, but that allows an operator to monitor the quantity of items in the image.

FIG. 6 illustrates still another pop-up menu analogous to the pop-up menu illustrated in FIG. 2 but that allows an operator to quantify the number of customers that are waiting in line at a particular register in a supermarket.

FIG. 7 illustrates a second representative display 68 that is generated using the checklist system 16 illustrated in FIG. 1 and which appears at the operator interface 14 also illustrated therein.

FIG. 8 illustrates a control panel display according to one embodiment of the present invention.

FIG 9 illustrates a control panel display according to another embodiment of the present invention.

FIG. 10 illustrates a control panel display according to yet another embodiment of the present invention.

### DETAILED DESCRIPTION

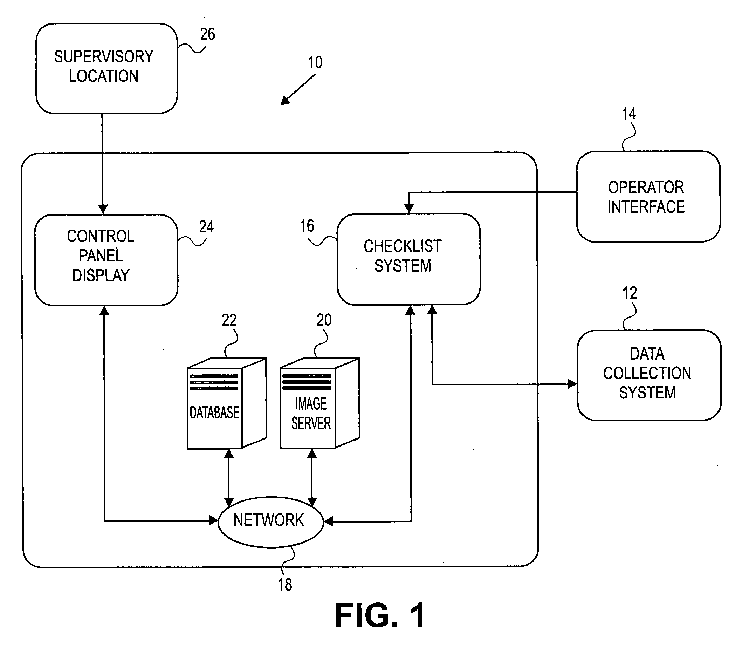

Embodiments in accordance with the present invention will now be described with reference to the drawing figures, in which like reference numerals refer to like parts throughout. FIG. 1 is a schematic diagram of a monitoring system 10 according to an embodiment of the present invention. The monitoring system 10 includes a data collection system 12 and an operator interface 14 that are each connected to a checklist system 16. In turn, the checklist system 16 is connected to a network 18, which itself is connected to an image server 20, a database 22 and a control panel display 24. The control panel display 24 is also connected to a supervisory location 26.

As will be discussed below, certain embodiments of the monitoring system 10 can be used as security systems, typically by including motion sensors or video monitors that may be used, in conjunction with an operator, to detect motion at a particular location. As will also be discussed below, certain embodiments of the monitoring system 10 can also be used for a variety of other purposes. For example, certain embodiments may be used to detect the absence of a particular product at a location in a retail or grocery store (i.e., a "stock-out" condition), movement of people at a particular location, cashier behavior (e.g., adherence to proper checkout procedures, accumulation of customers across all available cashiers, theft), customer behavior (i.e., reaction to various marketing strategies and stimuli), and/or operational procedure compliance (e.g., adherence to guidelines for unloading merchandise from a truck or from a storage area, adherence to guidelines for efficiently placing products on a shelf in a retail environment).

According to certain embodiments of the present invention, the data collection system 12 illustrated in FIG. 1 takes the form of a closed circuit television system (CCTV) and includes one or more cameras positioned at one or more locations that are to be monitored. For example, the data collection system 12 may include a plurality of cameras located throughout a retail store, a grocery store, a warehouse, or a loading dock. According to these embodiments, the data collection system 12 is capable of taking photographs and/or video footage with one or more of the cameras.

According to other embodiments of the present invention, the data collection system 12 includes types of sensing equipment other than cameras. For example, the data collection system 12 may include thermal imaging equipment (e.g., thermal sensors), Radio Frequency Identification (RFID) sensors, fire alarm system sensors (e.g., smoke detectors), and security system sensors (e.g., motion sensors).

The data collection system 12, according to certain embodiments of the present invention, extends across a wide geographical area. For example, the data collection system 12 may include cameras or other sensors positioned at a plurality of stores in a regional retail chain or at a plurality of warehouses across one or more countries.

The operator interface 14 illustrated in FIG. 1, according to certain embodiments of the present invention, is a location at which a human operator is capable of interacting with the checklist system 16. The checklist system 16, as mentioned above, is connected to both the data collection system 12 and the operator interface 14. As such, according to certain embodiments of the present invention, the checklist system 16 controls one or more sensors (e.g., cameras) in the data collection system 12 and can cause a sensor to move to a particular location and/or to begin or cease collecting data at a location.

The representative checklist system 16 illustrated in FIG. 1 is also connected to the image server 20 and the database 22 through the network 18. However, according to other embodiments of the present invention, the image server 20 and/or the database 22 may be located elsewhere in the monitoring system 10 (e.g., within the checklist system 16).

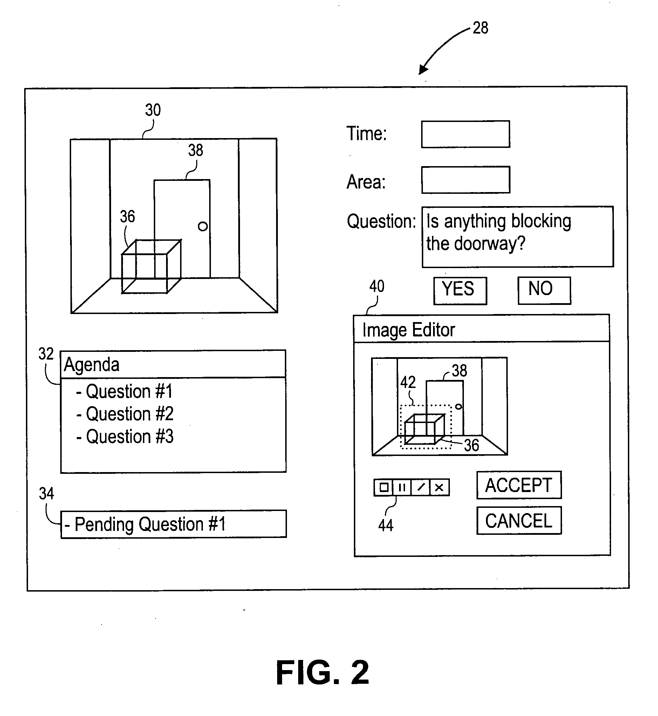

In operation, the checklist system 16 illustrated in FIG. 1 retrieves information from the database 22 and stores data collected using the data collection system 12 in the image server 20 and/or the database 22. According to certain embodiments of the present invention, the checklist system 16 retrieves operational instructions (i.e., instructions that detail how a monitoring procedure should be implemented) that are stored in the database 22. The checklist system 16 then uses those operational instructions to generate a display menu at the operator interface 14 that provides the operator with an agenda (e.g., an hour-by-hour or minute-by-minute calendar) for monitoring a location. A plurality of such display menus, and pop-up menus that may be generated in connection therewith, are illustrated in FIGS. 2-7 and will be discussed below.

Typically, data collected by the data collection system 12 cannot be adequately processed by currently-available and/or cost-effective data processing systems such as, for example, image recognition systems. As such, as will be discussed below, an operator at the operator interface will usually play a role in the operation of the monitoring system 10.

As will be discussed below with reference to FIGS. 2-7, certain embodiments of the checklist system 16 illustrated in FIG. 1 provide the operator with detailed instructions and/or simply-phrased questions (e.g., "YES"/"NO" questions). This allows for even the most novice of operators to relatively easily participate in the monitoring of one or more locations and/or procedures.

According to certain embodiments of the present invention, one or more neural networks and/or image-recognition technologies may be used to further simplify what the operator is requested to do. For example, a neural network or image-recognition technology may be used to determine that there are no items on the shelf of a particular grocery store (i.e., that there is a stock-out condition). In other words, certain embodiments of the present invention do not require operator input, but rather rely completely on neural networks, artificial intelligence and/or sophisticated image processing and recognition to determine whether operational procedures are being adequately followed.

According to certain embodiments of the present invention, an operator, through the operator interface 14 and checklist system 16, controls sensors in data collection system 12 to manually scan one or more locations and, when scanning the shelves of a grocery store, can detect a stock-out condition. According to some of these embodiments, the operator takes an image of the stock-out location, and the checklist system 16 automatically puts an item into the calendar that specifies that the location is to be re-checked, for example, in 20 minutes. After the given time period, the sensor (in this case, usually a camera), is automatically (i.e., without operator control) sent back to the location of the detected stock out and takes another picture of the location. Then, the images of 20 minutes ago and the new image are presented to the operator and the operator is requested to make a decision concerning whether a stock-out condition still exists.

According to certain embodiments of the present invention, one or more components in the monitoring system 10 are configured to be able to contact communications systems (e.g., a cellular phone systems and text messaging systems). According to some of these embodiments, when certain conditions are detected (e.g., a breach in security or a breach in protocol that could lead to property damage), a text message, a recorded message, and/or an image is forwarded to a senior responsible party that is likely to address the issue immediately (e.g., a manager). To determine whether the senior responsible party has reacted timely and adequately, certain embodiments of the present invention automatically send a sensor to the location where the conditions was detected after a certain period of time has elapsed and the sensor checks whether the condition has been addressed. If the condition has not been addressed, another message is sent and the process continues until the problem is solved. Upon each iteration of the above-discussed procedure, the process will scale and contact more and more senior responsible parties (e.g., the section manager, store manager, region manager, operations manager, etc.).

As briefly mentioned above, according to certain embodiments of the present invention, instructions in an agenda or calendar format are generated by the checklist system 16. The agenda or calendar is typically generated using information stored in the database 22 and the agenda or calendar may be used to control where a sensor in the monitoring system is located and for how long of a time period the sensor monitors a particular location. This allows the data collection system to monitor the location by, for example, taking a picture or video footage. Then, the checklist system 16, according to certain embodiments of the present invention, applies an appropriate data processing technique (e.g., image processing) and/or filters the data. The checklist system 16 then relays the processed and/or filtered data back to the operator and requests that the operator make a decision concerning whether a condition has been met.

FIG. 2 illustrates a first representative display 28 that is generated using the checklist system 16 illustrated in FIG. 1 and which appears at the operator interface 14 also illustrated therein. In the upper left corner of the display 28 is located an image 30 that had been captured by a camera in the data collection system 12. Below the image 30 is located an agenda 32 (also commonly referred to as a calendar) that includes a series of questions (i.e., Question #1, Question #2, etc.). These questions are typically worded so as to guide a human operator sitting before the interface 14 through the steps of a method for monitoring the area shown in the image 30.

Below the agenda 32 is provided a region 34 that displays questions that the operator was unable to answer at the time that they were posed but to which answers are still needed. Often, questions that appear in region 34 are able to be answered and removed from region 34 once a new, possibly sharper, image 30 appears.

In the upper right corner of the display 28 are indicated the time at which the image 30 had been obtained and from which camera. Also included in the upper right corner is a question (i.e., "Is anything blocking the doorway?") and two buttons (i.e., "YES" and "NO") that the operator may choose from either one. In the present instance, since image 30 shows that a box 36 is blocking the doorway 38, the operator clicks on the "YES" button and generated pop-up menu 40. As will be discussed later, this answer will also be reflected at the control panel display 24.

The pop-up menu 40 illustrated in FIG. 2 is an image editor that includes a copy of the above-discussed image 30. Pursuant to receiving instructions to do so from the display 28, the operator drew a rectangle 42 around the box 36 using the drawing tools 44 included in the pop-up menu 40. In alternate embodiments of the present invention, the drawing procedure can be automatically conducted using image recognition. Since the rectangle 42 is accurately drawn around the box 36 to reflect the item that is blocking the doorway 38, the operator may now click on the "ACCEPT" button in the pop-up menu 40 and send the image 30, which includes the rectangle 42, to either the database 22 or image server 20 illustrated in FIG. 1. Otherwise, the operator could have clicked on the "CANCEL" button and re-drawn the rectangle 42.

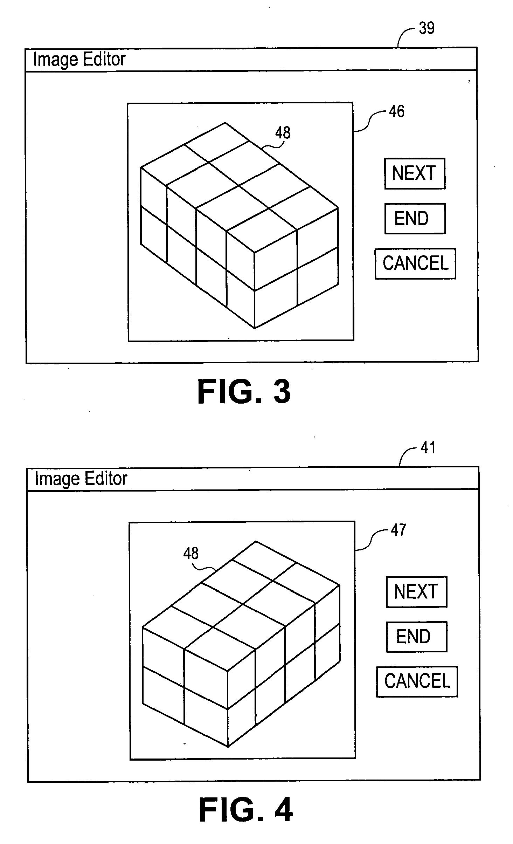

FIGS. 3 and 4 each illustrate pop-up menus 39, 41 analogous to the pop-up menu 40 illustrated in FIG. 2 and that show different views 46, 47 of the same item 48. The pop-up menus 39, 41 illustrated in FIGS. 3 and 4 may be used, for example, when the question posed in the upper right corner of the display 28 illustrated in FIG. 2 is whether the shelf 48 is fully stocked. Under such circumstances, the operator would click on the "NEXT" button if all of the shelf space visible in FIG. 3 was fully stocked, which would generate the pop-up menu 41 illustrated in FIG. 4. If all of the visible shelf space in FIG. 4 was also fully stocked, the operator would again click on the "NEXT" button and the views 46, 47 would be sent to either the database 22 or image server 20. If any shelf space visible in either FIG. 3 or FIG. 4 were empty, the operator would click on the "END" button and the image showing the empty shelf space would be sent to either the database 22 or image server 20. In alternate embodiments, the stock-out procedure can also be done automatically.

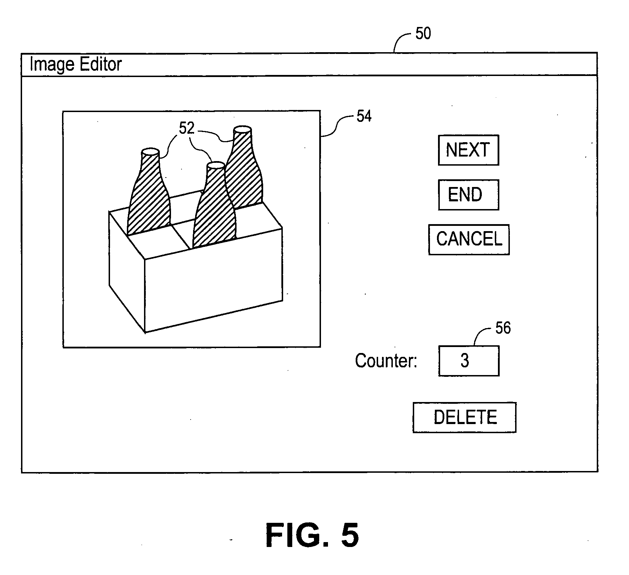

FIG. 5 illustrates another pop-up menu 50 analogous to the pop-up menu 40 illustrated in FIG. 2 but that allows an operator to monitor the quantity of items 52 in the image 54. Using the pop-up menu 50, an operator can, for example, use a computer mouse to click on every item 52 (i.e., bottle) shown in the image 54. Typically, with each click of the mouse, a marker is drawn on one of the items and the counter 56 is incremented by one. Should the operator make a mistake, the counter can be decremented by one and a marker may be removed from the image 54 using the "DELETE" button. In alternate embodiments of the present invention, this can be automatically accomplished.

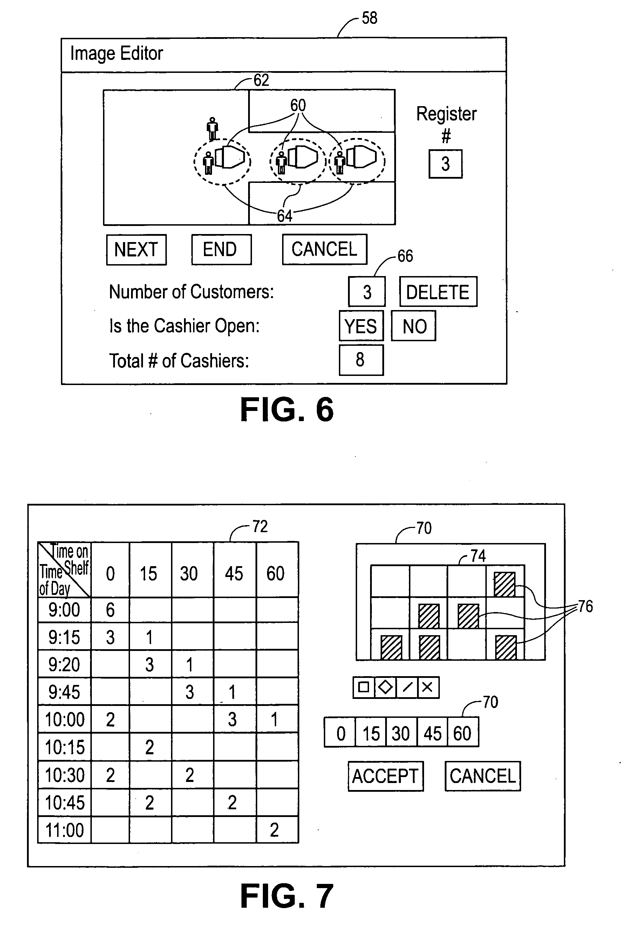

FIG. 6 illustrates still another pop-up menu 58 analogous to the pop-up menu 40 illustrated in FIG. 2 but that allows an operator to quantify the number of customers 60 that are waiting in line at a particular register in a supermarket. According to certain embodiments of the present invention, a robotic system is included in the data collection system 12 and controlled by the checklist system 16. This robotic system indicates, in the upper right corner of pop-up menu 58, which register is being monitored in the image 62. Also, the time and date of when the image 62 was generated can be automatically collected by the monitoring system 10. Therefore, in the pop-up menu 58, the operator merely clicks or draws circles 64 around the customers waiting in line and a counter 66 is incremented. Using the pop-up menu 58, the operator can also input whether the cashier is open.

One advantage of using the pop-up menu 58 illustrated in FIG. 6 is that the operator, unlike a fully-automated system image recognition system, is able to distinguish between the people seen in the image 62 who are waiting in line or those who are merely accompanying people who are waiting in line. Also, certain embodiments of the present invention are implemented using pop-up menus that ask very simple questions (e.g., YES/NO questions) so as to prevent operator error, even if the operator is a novice.

FIG. 7 illustrates a second representative display 68 that is generated using the checklist system 16 illustrated in FIG. 1 and which appears at the operator interface 14 also illustrated therein. As illustrated in FIG. 7, the display 68 includes an image 70 and a spreadsheet 72. The image 70 is of a storage facility 74 (e.g., a collection of storage bins) that includes a plurality of items 76 (e.g., boxes) stored therein. The spreadsheet 72 includes a plurality of times of day in the left-most column thereof and a plurality of times that items 76 have been on the shelves of the facility 74 on the top-most row thereof.

When the display 68 initially pops up on the operator interface 14, the operator is directed to click once on each item 76 viewable in the image 70. As seen in the second cell from the left in the second row from the top of the spreadsheet 72, the operator indicated that six (6) items 76 were viewable in the image 70 generated at 9:00 (i.e., at time zero).

Fifteen minutes later (i.e., at 9:15), three new items 76 were placed the storage facility 74, so the operator clicked on those three items pursuant to clicking on the "0" box on bar 78. Then, because one item 76 remained out of the six that had been visible at time zero, the operator clicked on that single item 76 pursuant to clicking on the "15" box in bar 78, indicating that the item had been in the storage facility 74 for 15 minutes.

Display 68 is particularly useful for monitoring perishable goods (e.g., milk and yogurt). Once an item 76 has remained in the storage facility 74 beyond a predetermined amount time, according to certain embodiments of the present invention, a responsible party will be notified that the item is about to become unsuitable for sale.

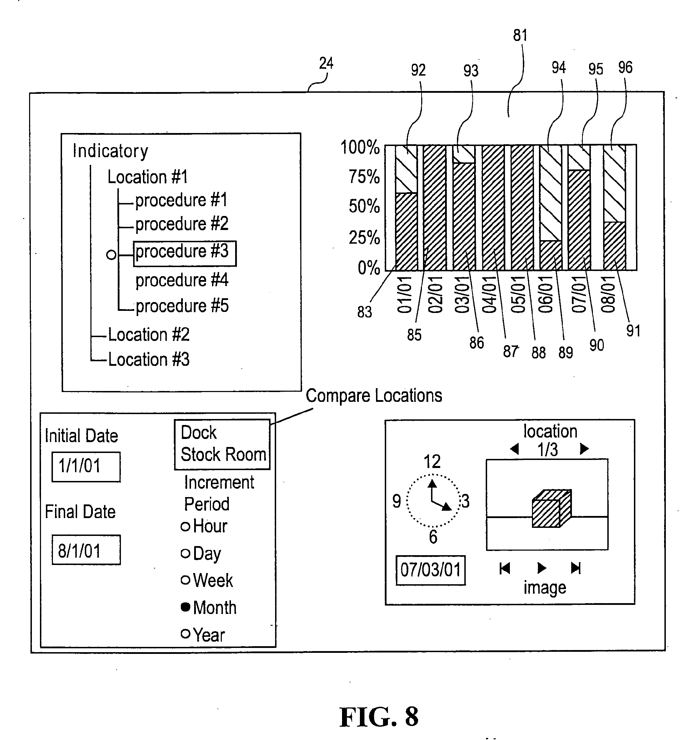

Once an operator has interacted with a display generated by the checklist system 16 at the operator interface 14, a control panel display 24 may be generated. Several representative control panel displays 24, which are typically used by supervisors or senior managers who wish to quickly get a sense of how operations are implemented across their organization, are illustrated in FIGS. 8-10.

FIG. 8 illustrates a control panel display 24 according to one embodiment of the present invention. In the upper left area 79 of the control panel display 24 illustrated in FIG. 8, a plurality of location indicators are provided (e.g., location #1, location #2, etc.). Each of these location indicators may correspond, for example, to a different loading dock, retail or grocery store, or warehouse.

Associated with each of the location indicators is a set of specific procedures that were monitored using the data collection system 12, the operator interface 14, and the checklist system 16 illustrated in FIG. 1 and discussed above. If a loading dock is the location #1 indicated in the control panel display 24 illustrated in FIG. 8, the specific procedures monitored at the loading dock may have included detecting that a truck was present at the loading dock, taking video footage of the truck being unloaded, sending the video to the operator at the operator interface 14, and allowing the operator to make a decision as to whether the procedure for unloading the truck had been complied with or not.

As the operator answers all of the relevant questions and clicks on the appropriate buttons on a display such as, for example, the display 28, information is forwarded to the database 22 and/or image server 20. The information becomes available for viewing at the control panel display 24. This allows someone located at the supervisory location 26 (e.g., the corporate headquarters of a chain of grocery stores) to monitor how close to completion a given procedure is.

In the upper right area 81 of the control panel display 24, a bar graph shows the compliance percentages of a selected procedure at a selected location over a given time period (selected as monthly in the bottom left area of the control panel display 24 illustrated in FIG. 8). The bars shown in the upper right 81 area have differing shading, which indicate the level of compliance over a given period of time (e.g. lower left to upper right line shading (see element numbers 83-91) indicates that there is positive compliance and upper left to lower right line shading (see element numbers 92-96) indicates that there is a negative compliance) Using the bar graph, someone located at the supervisory location 26 can then put their mouse over a portion of the graph, double-click and generate what is on the lower right area of the control panel display 24 illustrated in FIG. 8.

In the lower right area of the control panel display 24 illustrated in FIG. 8, all of the data that was collected during a selected (i.e., double-clicked or selected) month will become available. For example, if a first of three loading docks was monitored in July of 2001 and found, according to the upper right area of the control panel display 24, to have had a 75% compliance with respect to procedure #3, someone located at the supervisory location 26 may use a monitoring system 10 according to the present invention to view all of the images that the operator saw during that month. This is done by double-clicking on the "07/01" bar graph in the upper right area of the control panel display 24 and using the arrows in the lower right area to select the appropriate loading dock. Then, the interested party may scroll through the images 80 taken at various dates and times. The present invention enables multiple shots or images in a located be viewed and compared. The present additionally enables multiple different locations, either in a single monitored location or in differing geographic locations to be compared and viewed as well.

In the lower left area of the control panel display 24, someone located at the supervisory location 26 can choose what time periods they want to examine. That person can also choose which location(s) they want to see data for. If more than one location is chosen, the bar graph in the upper right area will generally become a superimposed line graph and the compliance of various procedures over the same time periods can be compared between two or more locations.

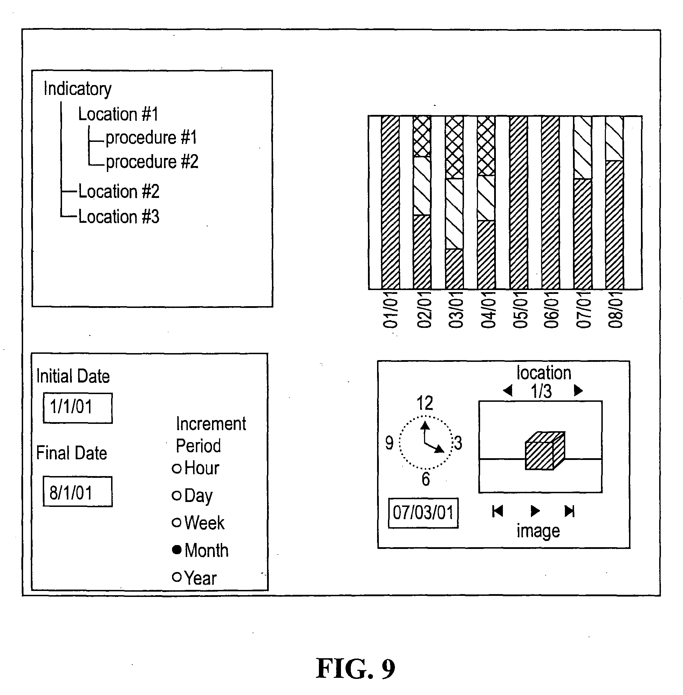

FIG. 9 illustrates a control panel display 24 according to another embodiment of the present invention. In the upper right area of the control panel display 24 illustrated in FIG. 9, there are three portions of the bar graphs for February, March and April of 2001. The lower portions of each of these bar graphs indicate the percentage of the time that, pursuant to a shelf being empty of a particular product, the shelf was restocked within 15 minutes. The middle portion of each of these bar graphs indicates the percentage of the time that, pursuant to the shelf being empty, the shelf was restocked with the product within between 15 and 30 minutes. The upper portion of each of these bar graphs then indicates the percentage of the time that it took longer than 30 minutes to restock the shelf. Using the bar graph, someone located at the supervisory location 26 can put their mouse over a portion of the graph, double-click and generate the back-up data for obtaining such results. This type of display may be particularly useful to someone located at the supervisory location 26 when it is most desired to restock a shelf within a limited time period (e.g., 15 minutes) but when a true problem exists only after a product has not been restocked on a shelf for a relatively extended time period (e.g., longer than 30 minutes). It is noted that the above selection of months and days is merely used for illustrative purposes and it not intend to limit the present invention. The selected period can be based upon any used defined criteria.

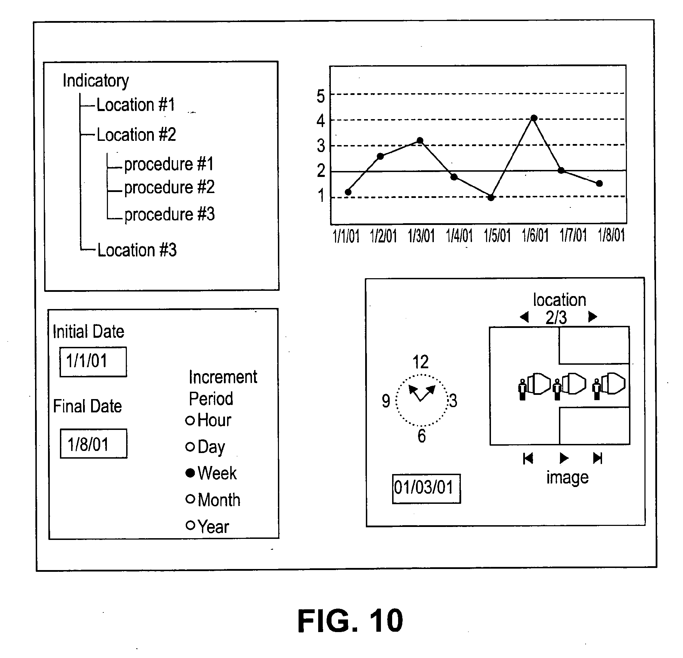

FIG. 10 illustrates a control panel display 24 according to yet another embodiment of the present invention. Using the control panel display 24 illustrated in FIG. 10, someone located at the supervisory location 26 can quickly get an idea of how many people, on average, are in a cashier's line at a supermarket over a chosen time period. More specifically, based on the information collected over time using the pop-up menu 58 illustrated in FIG. 6, a ratio of the number of people waiting in a cashier's line relative to how many cashiers are available can be calculated at a number of distinct times and averaged over a chosen time period. Relying on the line graph in the upper right area of the control panel display 24 illustrated in FIG. 10, if the number of people per line exceeds a threshold level (e.g., two people in FIG. 10) or if the number of people is below the threshold level (e.g., one person in FIG. 10), the monitoring system 10 according to certain embodiments of the present invention sends out a message that more cashiers are needed or that there is an excess of cashiers which need to be removed. The sending of this message may be done, for example, by text messaging system, the Internet, and/or a telecommunications system to which the monitoring system 10 is operably connected.

The principles used to generate a control panel display 24 may also be applied to generate a control panel display that keeps track of the quantity of extraordinary events during a given time period. For example, an operator could record any occurrences of motion being detected at locations where such motion is not expect (e.g., in a warehouse that is supposed to be empty). The same kind of line graph as is illustrated in the upper right area of FIG. 10 could be used to track the average number of such occurrences over a given time period and, if a threshold value it exceeded, the police could automatically be called or the operator could go over to the location to investigate.

The many features and advantages of the invention are apparent from the detailed specification, and thus, it is intended by the appended claims to cover all such features and advantages of the invention, which fall within the true spirit, and scope of the invention. Further, since numerous modifications and variations will readily occur to those skilled in the art, it is not desired to limit the invention to the exact construction and operation illustrated and described, and accordingly, all suitable modifications and equivalents maybe resorted to, falling within the scope of the invention.

## Claims

1. A monitoring system, comprising:
a data collection system configured to collected data from a location;
an operator interface; and
a checklist system configured to receive the data from the data collection system, to request an input from an operator at the operator interface, and to process the data using an automated process and the operator input.

2. The monitoring system of claim 1, further comprising:
a display that provides statistical information about a monitored process at the location based on processed data received from the checklist system.

3. The monitoring system of claim 1, wherein the data collection system collects at least one image.

4. The monitoring system of claim 1, further comprising:
a database operably connected to the checklist system, wherein the database includes operator instructions that detail how an operator can accurately monitor a process monitored by the monitoring system.

5. The monitoring system of claim 1, wherein the checklist system is further configured to provide the operator with instructions for monitoring a process.

6. The monitoring system of claim 1, wherein the data collection system comprises at least one of a thermal sensor, a Radio Frequency Identification (RFID) sensor, a fire alarm system sensor, and a motion sensor.

7. The monitoring system of claim 1, wherein the checklist system is configured to control at least one of position and sensing interval of a sensor in the data collection system.

8. The monitoring system of claim 1, wherein the checklist system is configured to monitor at least one of a "stock-out" condition, movement of an individual, customer behavior, and compliance with an operational procedure.

9. A method of monitoring, the method comprising:
collecting data pertaining to a location in an automated manner;
presenting at least a portion of the data to an operator and requesting an input from an operator; and
processing the data using the input from the operator and an automated procedure.

10. The method of claim 9, further comprising:
providing statistical information related to the data at a remote location.

11. The method of claim 9, wherein the collecting step comprises collecting an image.

12. The method claim 9, further comprising:
storing operator instructions that detail how the operator can accurately monitor a process monitored by a monitoring system; and
providing the operator with the operator instructions as part of the presenting step.

13. The method of claim 9, wherein the collecting step comprises collecting the data from at least one of a thermal sensor, a Radio Frequency Identification (RFID) sensor, a fire alarm system sensor, and a motion sensor.

14. The method of claim 9, further comprising:
automatically controlling at least one of position and sensing interval of a sensor during the collecting step.

15. The method of claim 9, wherein the processing step includes monitoring at least one of a "stock-out" condition, movement of an individual, customer behavior, and compliance with an operational procedure.

16. The method of claim 9, further comprising:
providing a graphical interface that summarizes results of the processing step.

17. A monitoring system, comprising:
means for collecting data pertaining to a location in an automated manner;
means for presenting the data to an operator;
means for requesting an input from an operator; and
means for processing the data using the input from the operator and an automated procedure.

18. A monitoring system, comprising:
a data collection system configured to collected data from a location;
a data processing system; and
a checklist system configured to receive the data from the data
collection system, to request an input from the data processing system, and to process the data using an automated process and the input from the data processing system.

19. The monitoring system as in claim 18, wherein the data is accessible via a graphical user interface.

20. The monitoring system as in claim 18, wherein the data is configured to be summarized in a first user defined manner and wherein the data is able to be manipulated into a desired manner.
